(19) **Europäisches Patentamt**

**European Patent Office**

**Office européen des brevets**

(11) **EP 0 917 941 B1**

(12) **EUROPÄISCHE PATENTSCHRIFT**

(45) Veröffentlichungstag und Bekanntmachung des Hinweises auf die Patenterteilung:
**06.03.2002  Patentblatt 2002/10**

(51) Int Cl.⁷: **B29B 7/48**, B01F 15/00, B01F 7/04

(21) Anmeldenummer: **98121461.2**

(22) Anmeldetag: **11.11.1998**

(54) **Mischvorrichtung**

Mixer

Mélangeur

(84) Benannte Vertragsstaaten:
**BE CH DE ES FR GB IT LI NL**

(30) Priorität: **24.11.1997  DE 19751730**

(43) Veröffentlichungstag der Anmeldung:
**26.05.1999  Patentblatt 1999/21**

(73) Patentinhaber: **Bayer Aktiengesellschaft**
**51368 Leverkusen (DE)**

(72) Erfinder: **Schuchardt, Heinrich**
**51373 Leverkusen (DE)**

(56) Entgegenhaltungen:
**DE-A- 1 745 541**  **US-A- 5 399 012**
**US-A- 5 407 266**

**Beschreibung**

Die Erfindung betrifft eine Mischvorrichtung zur Behandlung von viskosen Substanzen, bestehend aus einem beheizbaren Behälter mit Produkteintritt auf der einen Seite des Behälters und Produktaustritt auf der anderen Seite des Behälters, gegebenenfalls einem Brüdenstutzen sowie zwei oder mehreren zueinander parallelen, gleichsinnig rotierenden Wellen, an denen mittels Speichen Ringscheiben angebracht sind, wobei die Ringscheiben in axialer Richtung gewellt ausgeführt sind und Ringscheiben und Speichen zusammen mit der sie tragenden Welle, die Ringscheiben und Speichen sowie die diese tragende, jeweils benachbarte Welle kinematisch reinigen und wobei das Gehäuse durch die Ringscheiben und Speichen bei Rotation der Wellen kinematisch gereinigt wird.

Bei der Erzeugung und Verarbeitung von Kunststoffen und Kautschuk müssen hochviskose Flüssigkeiten, die gegebenenfalls feinteilige Feststoffe enthalten, verfahrenstechnisch behandelt werden. Insbesondere werden Vorrichtungen zum Mischen, Ausdampfen und Reagieren von Kunststoffen benötigt. Diese Mischer bzw. Reaktoren müssen eine gute Mischwirkung aufweisen, und z.B. im Falle einer Ausdampfung flüchtiger Komponenten infolge einer Freisetzung durch Reaktion, auch eine schnelle Erneuerung der freien Oberflächen des Mischers ermöglichen.

Für solche Verfahrensschritte, die durch den Stoffaustausch zwischen einer flüssigen Phase und der Gasphase bestimmt werden, ist das Produkt aus der Grenzfläche zwischen diesen beiden Phasen und dem Stoffübergangskoeffizienten geschwindigkeitsbestimmend.

Beim Stoffaustausch zwischen Gasphase und hochviskosen Flüssigkeiten wird der Stoffübergangskoeffizient im wesentlichen durch die Häufigkeit der Erneuerung der Flüssigkeitsoberfläche kontrolliert.

Die Erneuerung der Flüssigkeitsoberfläche kann durch verschiedene Mechanismen erfolgen, z.B. durch das Ausstreichen der Flüssigkeit an einer festen Oberfläche, z.B. einer Gehäusewand wie im US-Patent 5 399 012 beschrieben oder durch das Fließen von Flüssigkeit in frei fallenden Filmen wie bei der in der deutschen Offenlegungsschrift DE-1 745 541 gezeigten Vorrichtung.

Die Erzeugung und Erneuerung der Flüssigkeitsoberfläche durch die Bildung freier Flüssigkeitsfilme ist vorteilhaft, da zum einen der apparative Aufwand zur Erneuerung der Oberfläche gering bleibt und zum anderen wenig mechanische Energie in die Flüssigkeit eingetragen werden muß.

Bei Vorgängen wie Ausdampfen von Lösungsmitteln und Polykondensationsreaktion unter Freisetzung flüchtiger Produkte, die bei erhöhter Temperatur erfolgen, kommt der Verweilzeit der zu behandelnden Flüssigkeit eine entscheidende Bedeutung zu. Dort wo das Mischgut sehr lange verweilt, treten bevorzugt Nebenreaktionen, z.B. thermischer Abbau von Polymeren bei Polykondensationsreaktionen auf, die die Qualität des Folgeproduktes beeinträchtigen. Insbesondere bei der Behandlung von hochviskosem Mischgut ist deshalb häufig eine kinematische Selbstreinigung der inneren Oberfläche der verwendeten Reaktoren erwünscht. Diese Anforderung ist beispielsweise in der europäischen Offenlegungsschrift EP-0 320 586-A1 beschrieben.

Die Schrift EP-0 320 586-A1 zeigt ein Beispiel für einen Mischapparat, in dem versucht wird beide Ziele, nämlich die Erzeugung und Erneuerung von Flüssigkeitsoberflächen durch Filmbildung und die Selbstreinigung der inneren Oberflächen der Apparatur zu verwirklichen. Bei genauer Betrachtung fällt jedoch auf, daß sowohl an der Gehäuseinnenwand als auch an den gehäuseseitig befestigten Stau- und Abstreifelementen der beschriebenen Mischapparatur als auch an den Rotoren bestimmte Flächensegmente ungereinigt bleiben.

Aufgabe der Erfindung ist es eine Vorrichtung zu schaffen, die sich kinematisch selbst reinigt und die die ständige Erneuerung der Flüssigkeitsoberfläche des Mischguts zum Stoffaustausch mit der Gasphase durch Bildung von frei fallenden Flüssigkeitsfilmen bewirkt.

Diese Aufgabe wird erfindungsgemäß gelöst durch eine Mischvorrichtung zur Behandlung von viskosem Mischgut, bestehend aus einem Behälter mit einem Produkteinlaß und einem Produktauslaß, gegebenenfalls einem Brüdenstutzen, zwei oder mehreren Wellen, an denen mittels Speichen Ringscheiben angebracht sind, mit einem Antriebsmittel für die gleichsinnige Rotation benachbarter Wellen, wobei die Vorrichtung dadurch gekennzeichnet ist, daß die Ringscheiben in Richtung der Rotationsachse der Wellen gewellt geformt sind, daß Ringscheiben und Speichen zusammen mit der sie tragenden Welle so gestaltet sind, daß sie die Flächen der Speichen, Ringscheiben und der diese tragenden jeweils benachbarten Welle bei der durch das Antriebsmittel hervorgerufenen Rotation der Wellen vollständig überstreichen, mit Ausnahme der in Richtung der Rotationsachse gesehenen, jeweils endständigen Ringscheiben, und daß die Ringscheiben auf ihrem Umfang die Gehäuseinnenwand überstreichen. Für die nachfolgende Beschreibung wird der Einfachheit halber die Gesamtheit aus Welle und mit der Welle verbundenen Speichen und Ringscheiben als Rotor bezeichnet.

Ein besonderer Vorteil der neuen Mischvorrichtung ist ihre kinematische Selbstreinigung. Unter kinematischer Reinigung soll hier das Überstreichen von Flächen eines Vorrichtungsteils durch die Kanten oder Flächen eines anderen Vorrichtungsteils verstanden werden, wobei zur Vermeidung der Blockierung bewegter Teile ein unter Berücksichtigung der Fertigungstoleranz erreichbares Spiel der bewegten Teile erlaubt wird.

In einer bevorzugten Ausführung der Erfindung sind die Speichen einer Welle jeweils an einer solchen Stelle mit der gewellten Ringscheibe verbunden, wo die Ringscheiben in Richtung der Rotationsachse der Welle gesehen, am stärksten ausgebuchtet sind.

Eine bevorzugte Variante der Vorrichtung ist mit einem Antriebsmittel für die betragsmäßig gleichschnelle Rotation benachbarter Wellen versehen. Hierdurch wird es möglich, benachbarte Wellen mit dem gleichen Typ von Ringscheiben und Speichen auszustatten, wodurch der Herstellungsaufwand für die Vorrichtung vermindert wird.

In einer weiteren Variante der Vorrichtung sind alle Speichen auf einer Welle in der gleichen Richtung gegen das Lot zur Rotationsachse der Welle geneigt ausgeführt.

Um bei der Reinigung der Gehäuseinnenwand die Reibung in den Spalten zwischen den Ringscheiben und der Gehäuseinnenwand zu vermindern, tragen in einer weiteren bevorzugten Ausführung der Vorrichtung die Ringscheiben auf einem Teil ihres Umfangs einen zusätzlichen Kamm, der die Gehäusewand reinigt. Die Kämme werden insbesondere so angeordnet, daß der Rotation der Wellen eine Förderwirkung entlang der Rotationsachse der Wellen resultiert.

Bevorzugt sind Mischguteinlaß und Auslaß an, in axialer Richtung gesehen, unterschiedlichen Enden der Mischvorrichtung angebracht.

In einer bevorzugten weiteren Variante sind die Kämme zur Förderung des Mischgutes auf dem Teil des Umfangs der Ringscheiben angeordnet, der eine schraubenförmige Steigung mit gleichem Vorzeichen (entsprechend einem Links- oder Rechtsgewinde) in Bezug auf die Rotationsachse aufweist.

Der Querschnitt der Speichen und Ringscheiben wird bei gleichem Achsabstand der Wellen um so dünner, je stärker die Ringscheiben axial gewellt sind. Deshalb wird eine Ausführungsform der Vorrichtung besonders bevorzugt, bei der die axiale Ausdehnung der gewellten Ringscheiben mindestens 4 mal so groß ist wie die maximale axiale Ausdehnung der Ringscheiben in einem geometrischen Meridianschnitt oder mit anderen Worten gesagt, die 4 mal so groß ist wie die Breite der Ringscheiben in axialer Richtung.

Die geometrischen Voraussetzungen für die gegenseitige Reinigung von Flächen und Kanten zweier gleichschnell und gleichsinnig rotierender Rotoren einer Mischvorrichtung sind in dem US-Patent 5 334 358 beschrieben. Eine gegenseitige Reinigung ist möglich, wenn in einem Radialschnitt die Summe oder die Differenz der Krümmungsradien im Berührungspunkt gleich dem Achsabstand ist.

Im allgemeinen Fall ist der Radialschnitt einer Fläche, die durch eine Kante gereinigt wird, ein Epizykloid. Eine mathematische Beschreibung findet sich in der europäischen Offenlegungsschrift EP-0 715 881 A2.

In den nachfolgenden Beispielen sind nur Mischvorrichtungen mit spielfreier Geometrie beschrieben. Selbstverständlich sind zum Vermeiden eines Verklemmens der Rotoren untereinander oder mit dem Gehäuse Spiele erforderlich. Aus einer spielfreien Geometrie läßt sich eine spielbehaftete Geometrie jedoch auf einfache Weise gewinnen. Die Ringscheiben und Speichen müssen in einem solchen Fall nur entsprechend dem gewünschten Spiel axial auseinandergezogen werden. Die Welle muß um den Betrag des gewünschten Spiels dünner, der Gehäuseinnenraum um das gewünschte Spiel größer gestaltet werden.

Wenn alle Ringscheiben und Speichen gleich gestaltet werden, kann die, in axialer Richtung gesehene, jeweils endständige letzte Ringscheibe mit ihren Speichen nicht auf der der Gehäusestirnseite zugewandten Seite gereinigt werden Eine Reinigung ist nur möglich, wenn diese Ringscheibe mit ihren Speichen auf der Gehäuseseite als Rotationsfläche ausgeführt ist, die sich an die Gehäusewand anschmiegt.

Eine Reinigung der Stirnseiten des Gehäuses ist immer möglich, wenn diese im Einflußbereich jeder Welle jeweils als Rotationsfläche ausgeführt werden, die jeweils durch die Kante einer Speiche überstrichen wird.

Um eine größere Heiz- bzw. Kühlfläche zu erhalten, können außer dem Gehäuse auch die Wellen oder auch gegebenenfalls zusätzlich die Speichen und Ringscheiben der Rotoren beheizt oder gekühlt werden. Dies ist z.B. möglich durch die Anbringung eines Systems innerer Wärmeträger-Kanäle, die die Wellen und gegebenenfalls Speichen und Ringscheiben des Mischers durchziehen und von einem Wärmeträgermedium durchströmt werden.

Die Mischvorrichtung eignet sich zum Mischen von insbesondere empfindlichem Mischgut aller Art, d.h. sowohl zum Mischen von gegebenenfalls feststoffhaltigen flüssigen Chemikalien oder Naturstoffen sowie insbesondere als Reaktor für beliebige chemische Reaktionen, bei denen es auf eine Erneuerung der Flüssigkeitsoberflächen ankommt. Besonders geeignet ist der Mischer als Reaktor für Reaktionen unter Freisetzung flüchtiger Stoffe z.B. für Polykondensationsreaktionen sowie für Trocknungs- und Ausdampfprozesse. Der Mischer kann auch beliebig mit im Prinzip bekannten Misch-, Förder- und Knetvorrichtungen gekoppelt sein, z.B. mit Schneckenförderern.

Die Erfindung wird nachstehend anhand der Figuren beispielhaft näher erläutert, ohne daß dadurch die Erfindung im Einzelnen eingeschränkt wird.

Figur 1a    zeigt eine vereinfachte Darstellung eines erfindungsgemäßen Mischers bei geöffnetem Gehäuse in der Aufsicht auf die Rotoren.

Figur 1b    zeigt eine Seitenansicht der Rotoren des Mischers nach Figur 1a bei geöffnetem Gehäuse.

Figur 1c    zeigt eine Vorderansicht der Rotoren des Mischers nach Figur 1 a bei geöffnetem Gehäuse.

Figur 2        zeigt eine perspektivische Darstellung der Rotoren eines erfindungsgemäßen Mischers/Reaktors.

Figur 3        zeigt einen Radialschnitt durch die Rotoren nach Figur 2 gemäß einem Schnitt entsprechend der Linie A-A' in Figur 1b.

Figur 4        zeigt einen Radialschnitt wie in Figur 3 jedoch in überlagerten Momentaufnahmen. Hierbei wurde der linke Rotor (2', 3', 4') festgehalten und die Relativbewegung des benachbarten rechten Rotors (2, 3, 4) im Laufe einer vollen Umdrehung eingezeichnet.

Figur 5a       zeigt eine perspektivische Darstellung der Rotoren einer Variante der erfindungsgemäßen Vorrichtung, bei der auf den Außenseiten der Ringe jeweils Kämme zur Reinigung der Gehäuseaußenwand angebracht wurden.

Figur 5b       zeigt eine Seitenansicht des Rotorsystems entsprechend Figur 5a.

Figur 6        zeigt einen Radialschnitt durch die Rotoren nach Figur 5a gemäß einem Schnitt entsprechend der Linie A-A' in Figur 1b.

Figur 7        zeigt einen Radialschnitt wie Figur 7 jedoch in überlagerten. Momentaufnahmen. Hierbei wurde der linke Rotor (2', 3', 4') festgehalten und die Relativbewegung des benachbarten rechten Rotors (2, 3, 4) im Laufe einer vollen Umdrehung eingezeichnet.

Figur 8        zeigt eine geometrische Abwicklung des Umfangs der Rotoren nach Figur 5.

## Beispiele

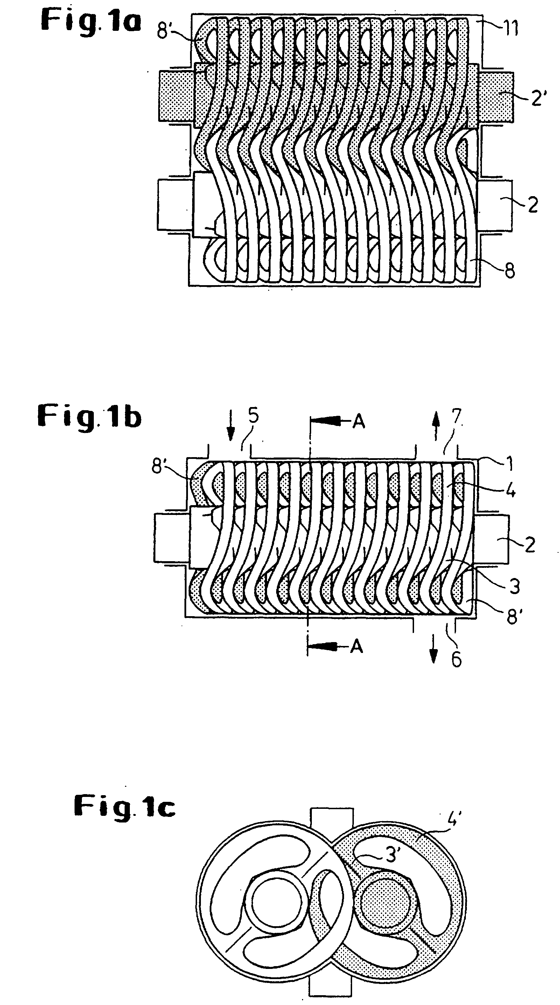

Die Figuren la-c zeigen den prinzipiellen Aufbau eines erfindungsgemäßen Mischers, bestehend aus einem gegebenenfalls beheizbaren Gehäuse 1 mit Produkteintritt 5 auf der einen und Produktaustritt 6 auf der gegenüberliegenden Seite und zwei gleichsinnig rotierenden Wellen 2, 2', an denen mittels Speichen 3, 3' Ringscheiben 4, 4' angebracht sind. Der Brüden aus dem nicht gezeichneten Mischgut kann über den Stutzen 7 abgezogen werden. Die Figuren 1a und 1c machen den gegenseitigen Eingriff der Ringscheiben 4 und 4' deutlich.

## Beispiel 1

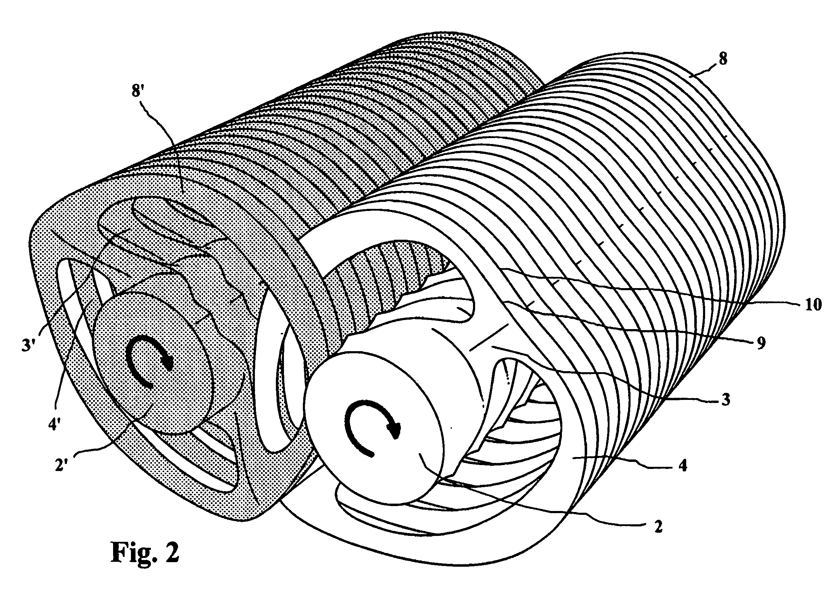

Figur 2 zeigt in einer perspektivischen Ansicht die Rotoren des Mischers, bestehend aus zwei gleichsinnig rotierenden Wellen 2, 2', an denen mittels Speichen 3, 3' Ringscheiben 4, 4' angebracht sind.
Die Speichen 3, 3' sind alle mit ihren äußeren Enden entsprechend einer der Vorzugsausführungen in eine axiale Richtung (zum Betrachter) geneigt.
Für die Beschreibung der Geometrie des hier gezeigten Mischers kann ein mit dem Achsabstand dimensionslos gemachtes Koordinatensystem verwendet werden:
Die Wellen 2 und 2' rotieren gleichschnell gegensinnig um die Achsen

$$\begin{pmatrix} x \\ y \end{pmatrix} = \begin{pmatrix} \pm\,0{,}5 \\ 0 \end{pmatrix}.$$

Die Kanten der Ringscheiben wurden wie folgt gewählt:

$$x = \sqrt{\tfrac{1}{2}}\,\cos(\tfrac{\pi}{2}(t + x_0)) + x_0$$

$$y = \sqrt{\tfrac{1}{2}}\,\sin(\tfrac{\pi}{2}(t + x_0))$$

$$z = 0,1 \cdot \left(4t^6 - 6t^4 + 1\right) + 0,1 \cdot x_0 + 0,2 \cdot i \pm 0,05, \text{ für } t < 1$$

$$z = 0,1 \cdot \left(4(t-2)^6 - 6(t-2)^4 + 1\right) + 0,1 \cdot x_0 + 0,2 \cdot i \pm 0,05, \text{ für } t \geq 1$$

mit **t** aus **[-1; 3]** und $x_0$ = ±0,5.

**i** ist ein Zähler für die Anzahl der Ringscheiben auf einer Welle.

Die vordere und hintere Ringscheibenkante 9, 10 sind durch eine Zylinderfläche verbunden, die sich mit der Gehäuseinnenwand 11 reinigt.

Die Ringscheibenkanten überstreichen die Speichenoberflächen. Die inneren Ringflächen werden von Speichen- und Ringkanten überstrichen.

Die geometrische Konstruktion erfolgt jeweils im Radialschnitt. Wenn eine Fläche eines Rotorenelements von einer Kante eines benachbarten Rotorenelements gereinigt werden soll, muß ihr Krümmungsradius im Radialschnitt gleich dem Achsabstand der benachbarten Rotoren sein. Wenn zwei Flächen benachbarter Rotoren einander reinigen, muß die Summe oder die Differenz ihrer Radien gleich dem Achsabstand sein.

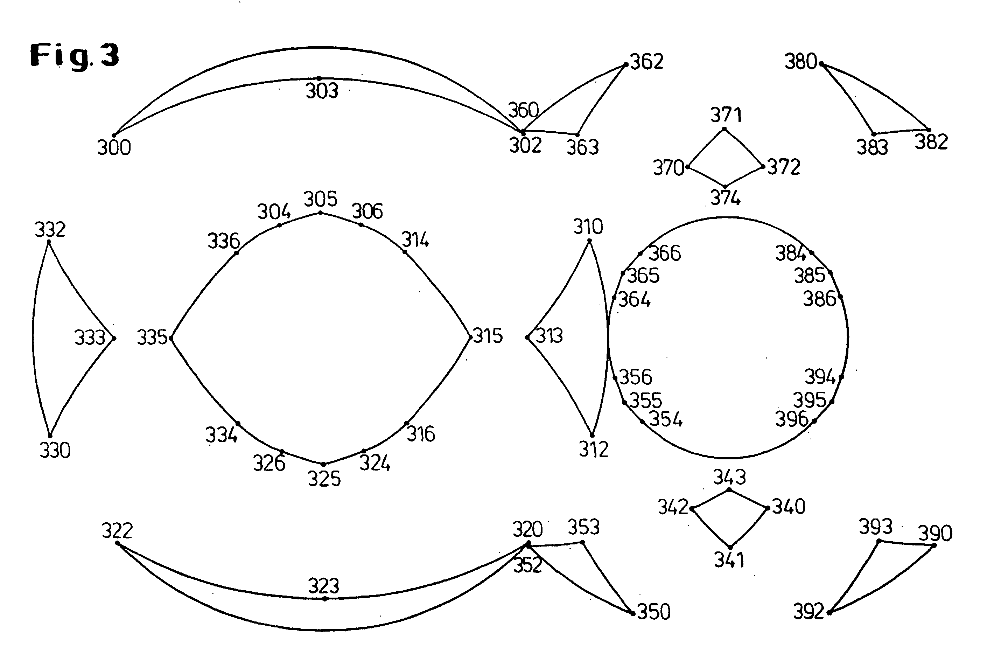

Die gegenseitige vollständige Reinigung zweier Rotoren läßt sich an dem Radialschnitt durch die Rotoren aus Figur.2 gemäß dem Schnitt entsprechend Linie A-A' in Figur 1b erläutern, wie er in Figur 3 gezeigt wird:

Das Gehäuse reinigt die Flächen 300-302, 310-312, 320-322, 330-332, 350-352, 360-362, 380-382, 390-392.

| | | |
|---|---|---|
| Die Fläche 302-303-300 | wird gereinigt durch | die Kante 343. |
| Die Fläche 312-313 | wird gereinigt durch | die Kante 350. |
| Die Fläche 313-310 | wird gereinigt durch | die Kante 362. |
| Die Fläche 322-323-320 | wird gereinigt durch | die Kante 374. |
| Die Fläche 333-330 | wird gereinigt durch | die Kante 392. |
| Die Fläche 332-333 | wird gereinigt durch | die Kante 380. |
| Die Fläche 304-305 | wird gereinigt durch | die Kante 392. |
| Die Fläche 305-306 | wird gereinigt durch | die Kante 350. |
| Die Fläche 306-314 | wird gereinigt durch | die Fläche 350-352. |
| Die Fläche 314-315 | wird gereinigt durch | die Kante 320. |
| Die Fläche 315-316 | wird gereinigt durch | die Kante 360. |
| Die Fläche 316-324 | wird gereinigt durch | die Fläche 360-362. |
| Die Fläche 324-325 | wird gereinigt durch | die Kante 362. |
| Die Fläche 325-326 | wird gereinigt durch | die Kante 380. |
| Die Fläche 326-334 | wird gereinigt durch | die Fläche 380-382. |
| Die Fläche 334-335 | wird gereinigt durch | die Kante 382. |
| Die Fläche 335-336 | wird gereinigt durch | die Kante 390. |
| Die Fläche 336-304 | wird gereinigt durch | die Fläche 390-392. |

| | | |
|---|---|---|
| Die Fläche 343-340 | wird gereinigt durch | die Kante 300. |
| Die Fläche 342-343 | wird gereinigt durch | die Kante 302. |
| Die Fläche 340-341 | wird gereinigt durch | die Kante 332. |
| Die Fläche 341-342 | wird gereinigt durch | die Kante 310. |
| Die Fläche 352-353 | wird gereinigt durch | die Kante 300. |
| Die Fläche 353-350 | wird gereinigt durch | die Kante 313. |
| Die Fläche 362-363 | wird gereinigt durch | die Kante 313. |
| Die Fläche 363-360 | wird gereinigt durch | die Kante 322. |
| Die Fläche 370-371 | wird gereinigt durch | die Kante 312. |
| Die Fläche 371-372 | wird gereinigt durch | die Kante 330. |
| Die Fläche 372-374 | wird gereinigt durch | die Kante 320. |

(fortgesetzt)

| | | |
|---|---|---|
| Die Fläche 374-370 | wird gereinigt durch | die Kante 322. |
| Die Fläche 382-383 | wird gereinigt durch | die Kante 320. |
| Die Fläche 383-380 | wird gereinigt durch | die Kante 333. |
| Die Fläche 392-393 | wird gereinigt durch | die Kante 333. |
| Die Fläche 393-390 | wird gereinigt durch | die Kante 302. |

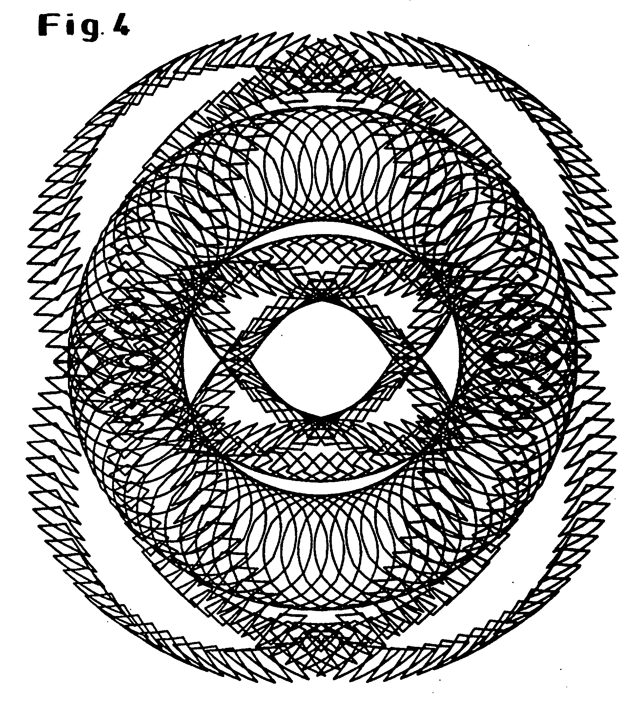

Daß alle Flächen während einer Umdrehung der Wellen gereinigt werden, wird auch aus Figur 4 ersichtlich. Hier wird der gleiche, etwas verkleinerte Radialschnitt wie in Figur 3 gezeigt, jedoch wurde der linke Rotor (300-336) festgehalten und die jeweilige Relativbewegung des rechten Rotors (350-396) in verschiedenen Momentaufnahmen einer ganzen Umdrehung eingezeichnet.

In den Figuren ist nur jeweils eine spielfreie Geometrie gezeigt. Selbstverständlicl sind zum Vermeiden eines Verklemmens der Rotoren miteinander und mit dem Ge häuse Spiele erforderlich. Aus einer spielfreien Geometrie läßt sich eine spielbehaftete jedoch einfach gewinnen. Die Ringscheiben 4, 4' und Speichen 3, 3' aus dem Beispie müssen nur entsprechend dem Spiel s axial auseinander gezogen werden. Die Welle muß um das Spiel dünner, das Gehäuse um das Spiel größer gestaltet werden.

Die Kanten der Ringscheiben 4, 4' ergeben sich dann wie folgt:

$$x = \sqrt{\frac{1}{2}} \cos(\frac{\pi}{2}(t + x_0)) + x_0$$

$$y = \sqrt{\frac{1}{2}} \sin(\frac{\pi}{2}(t + x_0))$$

$$z = 0{,}1 \cdot \left(4t^6 - 6t^4 + 1\right) + 0{,}1 \cdot x_0 + \left(0{,}2 + 2s\right) \cdot i \pm 0{,}05 \text{, für } t < 1$$

$$z = 0{,}1 \cdot \left(4(t-2)^6 - 6(t-2)^4 + 1\right) + 0{,}1 \cdot x_0 + \left(0{,}2 + 2s\right) \cdot i \pm 0{,}05 \text{, für } t \geq 1$$

mit **t** aus **[-1; 3]** und $x_0 = \pm 0{,}5$.

Da die Seitenflächen der Ringscheiben und der Speichen nicht senkrecht zur Rotationsachse stehen, ergibt sich aber an diesen ein etwas kleineres Spiel als **s**.

Aber auch ein äquidistantes Spiel s ist erzielbar:

Die Flächen von Speichen und Ringscheiben werden hierzu durch gedachte Kugeln des Radius **s** erzeugt, die mit den Punkten **(x, y, z)** der Kanten der Ringscheiben bzw. der Speichen mitgeführt werden.

## Beispiel 2

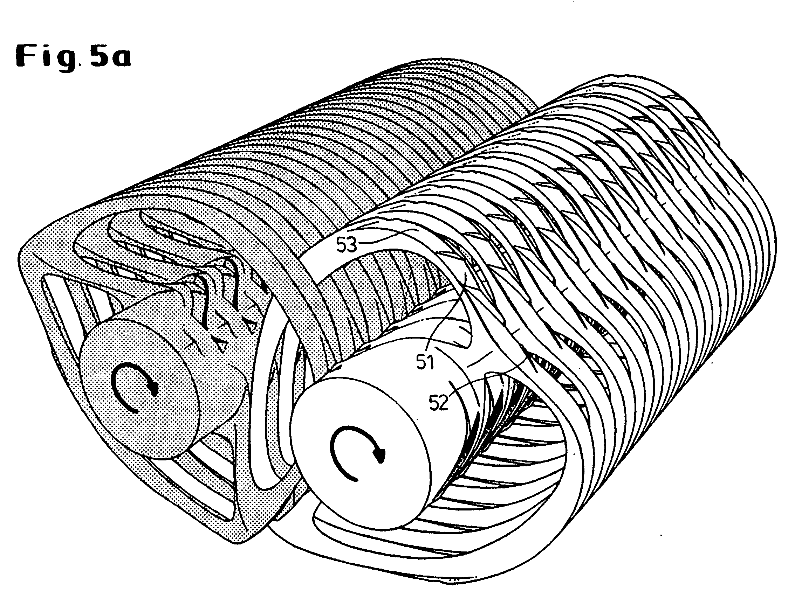

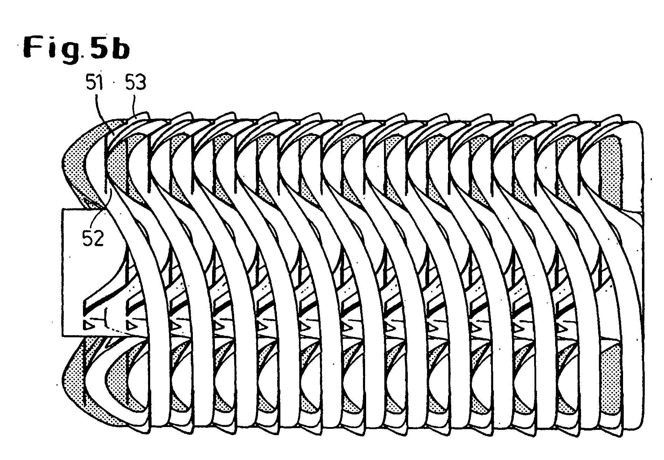

Figuren 5a und 5b zeigen die Rotoren einer Variante der erfindungsgemäßen Vorrichtung. Gegenüber der Vorrichtung nach Figur 2 sind die Ringscheiben 4, 4' stärker axial gewellt. Während im Beispiel **1** die gesamte Außenfläche der Ringscheiben ständig im Kontakt zum Gehäuse steht und dadurch zu hohen Reibungsverlusten führen kann, wurde in diesem Beispiel auf einem Teil ihres Umfanges ein Kamm 51, 53 angeordnet, der das Gehäuse 1 reinigt. Dabei wurde die Lage des Kammes 51, 53 so gewählt, daß bei Rotation der Wellen sich eine axiale Förderwirkung ergibt. Ist die gegenseitige Reinigung der Ringscheiben mit der benachbarten Welle gewünscht, so sind niedrigere Kämme 52 zwangsweise auch an anderen Stellen der Ringscheibe notwendig. Diese erreichen jedoch nicht das Gehäuse.

Bei Rotation der Wellen in der in Figur 5a eingezeichneten Richtung fördern die das Gehäuse reinigenden Kämme vom Betrachter weg. Figur 5b macht den Sitz der Kämme 51, 53 und 52 deutlich.

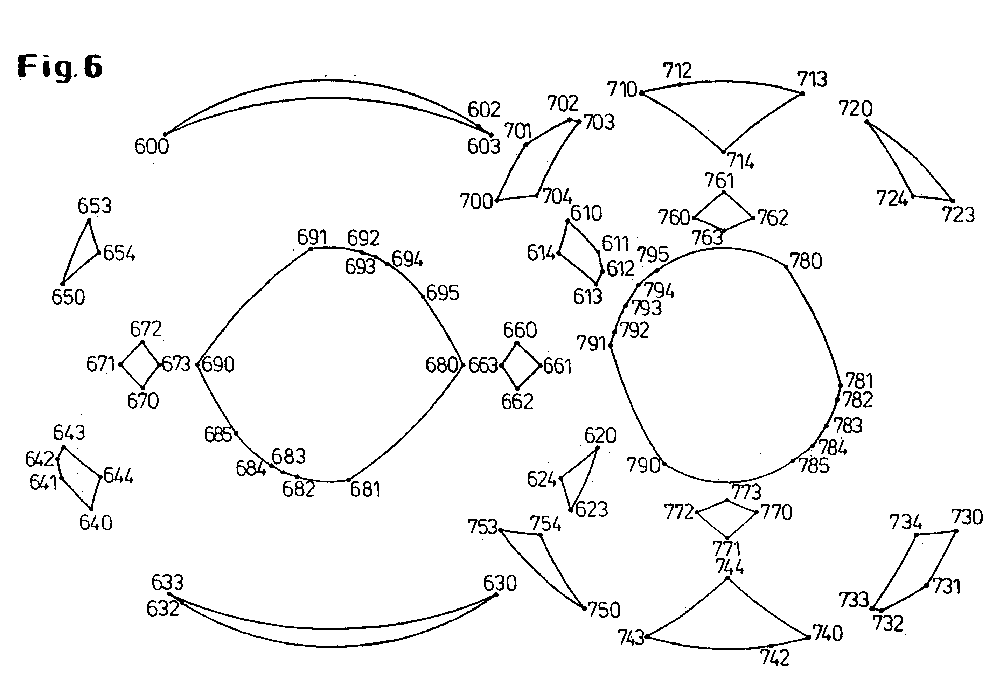

Figur 6 zeigt einen Radialschnitt durch die Rotoren nach Figur 5 gemäß dem Schnitt entsprechend Linie A-A' aus Figur 1b. Hier sind der Kamm 51 als Kanten 611, 641, 701, 731 zu erkennen. Den Nebenkämmen 52 entsprechen die geringfügigen Überhöhungen in radialer Richtung der Flächen 602-603, 632-633, 710-712, 740-742.

Für die Beschreibung der Geometrie dieses Mischers kann ein mit dem Achsabstand dimensionslos gemachtes Koordinatensystem verwendet werden:

Die Rotoren rotieren gleichschnell gegensinnig um die Achsen

$$\begin{pmatrix} x \\ y \end{pmatrix} = \begin{pmatrix} \pm 0,5 \\ 0 \end{pmatrix}.$$

Die Kanten der Ringscheiben wurden wie folgt gewählt:

$$x = \sqrt{\frac{1}{2}} \cos(\frac{\pi}{2}(t + x_0)) + x_0$$

$$y = \sqrt{\frac{1}{2}} \sin(\frac{\pi}{2}(t + x_0))$$

$$z = 0,15 \cdot \left(4t^6 - 6t^4 + 1\right) + 0,1 \cdot x_0 + 0,2 \cdot i \pm 0,05, \text{ für } t < 1$$

$$z = 0,15 \cdot \left(4(t - 2)^6 - 6(t - 2)^4 + 1\right) + 0,1 \cdot x_0 + 0,2 \cdot i \pm 0,05, \text{ für } t \geq 1$$

mit *t* aus **[-1; 3]**
und $x_0 = \pm 0,5$
*i* ist ein Zähler für die Anzahl der Ringscheiben auf einem Rotor.

Die Ausdehnung der Ringscheibe in einem Meridianschnitt ergibt sich aus dem Term $\pm$ **0,05** in der Gleichung für **z** zu 0,1. Für **i = 0** und $x_0$ **= 0,5** ergeben sich die Extremwerte für **z** zu

$$z_{min,max} = \pm 0,2 + 0,05.$$

Entsprechend beträgt die axiale Ausdehnung 0,4.

Die axiale Ausdehnung der gewellten Ringscheiben ist also 4 mal so groß wie die maximale axiale Ausdehnung der Ringscheiben in einem Meridianschnitt.

Die Kammhöhe beträgt das 0,035-fache des Achsabstandes der benachbarten Wellen:

Die gegenseitige Reinigung der Rotorelemente läßt sich an dem Radialschnitt durch die Rotoren aus Figur 5 gemäß dem Schnitt entsprechend Linie A-A' in Figur 1 erläutern, wie er in Figur 6 gezeigt wird:

| Die Fläche 600-602 | wird gereinigt durch | die Fläche 790-785. |
|---|---|---|
| Die Fläche 602-603 | wird gereinigt durch | die Kante 790. |
| Die Fläche 603-600 | wird gereinigt durch | die Kante 773. |
| Die Fläche 610-611 | wird gereinigt durch | die Kante 772. |
| Die Fläche 611-612 | wird gereinigt durch | die Kante 791. |
| Die Fläche 612-613 | wird gereinigt durch | die Kante 710. |
| Die Fläche 613-614 | wird gereinigt durch | die Kante 744. |
| Die Fläche 614-610 | wird gereinigt durch | die Kante 703. |
| Die Fläche 660-661 | wird gereinigt durch | die Kante 743. |
| Die Fläche 661-662 | wird gereinigt durch | die Kante 710. |
| Die Fläche 662-663 | wird gereinigt durch | die Kante 750. |

(fortgesetzt)

| Die Fläche 663-660 | wird gereinigt durch | die Kante 703. |
|---|---|---|
| Die Fläche 620-623 | wird gereinigt durch | die Fläche 792-793. |
| Die Fläche 623-624 | wird gereinigt durch | die Kante 750. |
| Die Fläche 624-620 | wird gereinigt durch | die Kante 750. |
| Die Fläche 630-632 | wird gereinigt durch | die Fläche 795-780. |
| Die Fläche 632-633 | wird gereinigt durch | die Kante 780. |
| Die Fläche 633-630 | wird gereinigt durch | die Kante 763. |
| Die Fläche 640-641 | wird gereinigt durch | die Kante 780. |
| Die Fläche 641-642. | wird gereinigt durch | die Kante 781. |
| Die Fläche 642-643 | wird gereinigt durch | die Kante 740. |
| Die Fläche 643-644 | wird gereinigt durch | die Kante 714. |
| Die Fläche 644-640 | wird gereinigt durch | die Kante 733. |
| Die Fläche 670-671 | wird gereinigt durch | die Kante 713. |
| Die Fläche 671-672 | wird gereinigt durch | die Kante 740. |
| Die Fläche 672-673 | wird gereinigt durch | die Kante 720. |
| Die Fläche 673-670 | wird gereinigt durch | die Kante 733. |
| Die Fläche 680-681 | wird gereinigt durch | die Kante 701. |
| Die Fläche 681-682 | wird gereinigt durch | die Fläche 712-713. |
| Die Fläche 682-683 | wird gereinigt durch | die Kante 713. |
| Die Fläche 683-684 | wird gereinigt durch | die Kante 720. |
| Die Fläche 684-685 | wird gereinigt durch | die Fläche 720-723. |
| Die Fläche 685-690 | wird gereinigt durch | die Kante 723. |
| Die Fläche 690-691 | wird gereinigt durch | die Kante 731. |
| Die Fläche 691-692 | wird gereinigt durch | die Fläche 742-743. |
| Die Fläche 692-693 | wird gereinigt durch | die Kante 743. |
| Die Fläche 693-694 | wird gereinigt durch | die Kante 750. |
| Die Fläche 694-695 | wird gereinigt durch | die Fläche 750-753. |
| Die Fläche 695-680 | wird gereinigt durch | die Kante 753. |

Entsprechend werden die Flächen 700ff durch die Kanten 600ff gereinigt.

An den Stellen 603, 633, 710, 740 liegen sehr schmale und deshalb zeichnerisch schlecht darstellbare Flächen vor, die durch die Kanten 700, 730, 613, 643 gereinigt werden.

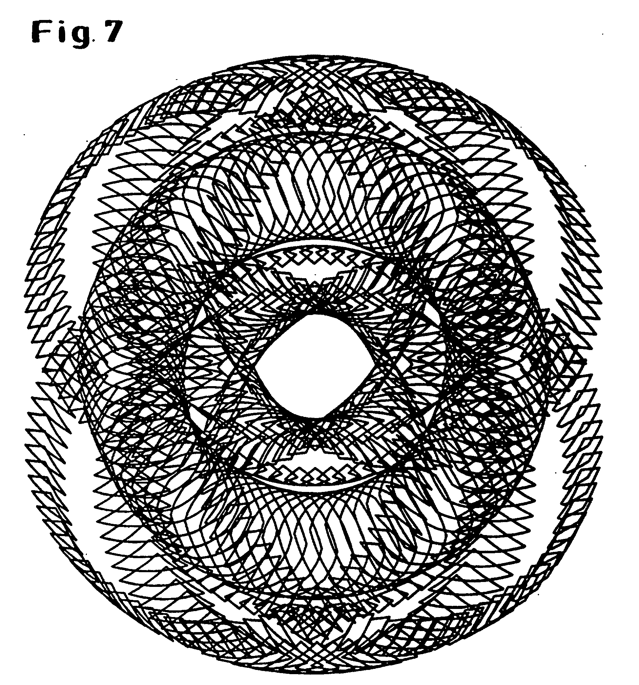

Daß alle Flächen gereinigt werden, wird auch aus Figur 7 ersichtlich. Hier wird der gleiche Typ von Radialschnitt wie in Figur 3 gezeigt, jedoch wurde der linke Rotor (600 ff.) festgehalten und die jeweilige Lage des rechten Rotors (700 ff.) während verschiedener Momente einer ganzen Umdrehung eingezeichnet.

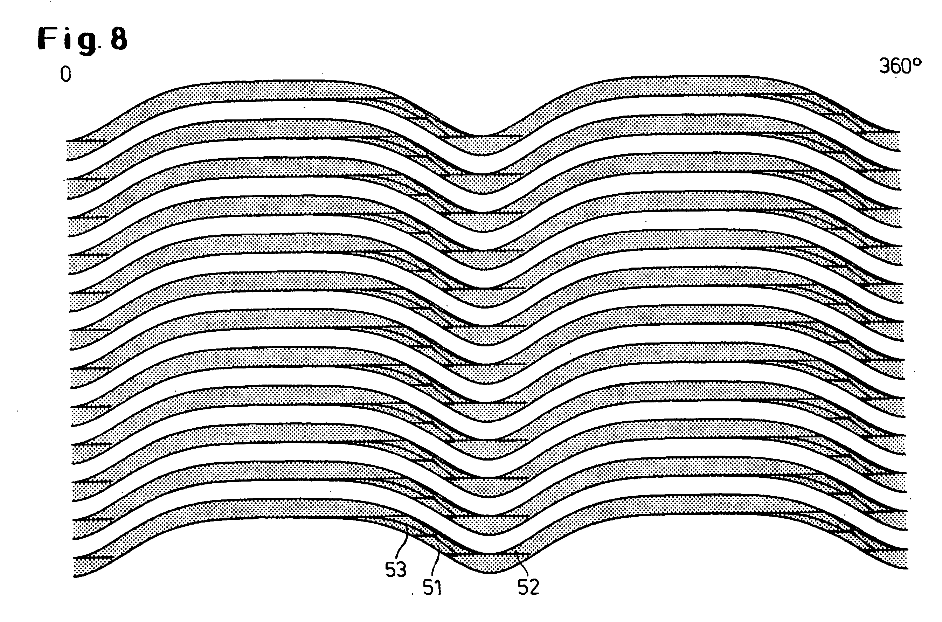

In Figur 8 ist eine geometrische Abwicklung des Umfangs der Ringscheiben 4' eines der Rotoren 2', 3', 4' gemäß Fig. 5a bzw. 5b dargestellt. Aus der Figur erkennt man, daß die Kämme 51, 53 und 52 nur auf einem kleinen Teil des Ringscheibenumfangs angebracht sind. Die Kämme 51, 53, die das Gehäuse 1 reinigen, weisen alle die gleiche Steigungsrichtung (in diesem Fall ein Linksgewinde) auf. Sie ermöglichen daher eine axiale Förderung des Mischgutes bei Rotation der Wellen.

**Patentansprüche**

1.  Mischvorrichtung zur Behandlung von viskosem Mischgut, bestehend aus einem Behälter (1) mit einem Produkteinlaß (5) und einem Produktauslaß (6) gegebenenfalls einem Brüdenstutzen (7), zwei oder mehreren Wellen (2, 2'), an denen mittels Speichen (3, 3') Ringscheiben (4, 4') angebracht sind, mit einem Antriebsmittel für die gleichsinnige Rotation benachbarter Wellen (2 bzw. 2'), **dadurch gekennzeichnet, daß** die Ringscheiben (4, 4') in Richtung der Rotationsachse der Wellen (2, 2') gewellt geformt sind, daß Ringscheiben (4) und Speichen (3) zusammen mit der sie tragenden Welle (2) so gestaltet sind, daß sie die Flächen der Speichen (3'), Ringscheiben (4') und der diese tragenden jeweils benachbarten Welle (2') bei der durch das Antriebsmittel hervorgerufenen Rotation der Wellen (2, 2') vollständig überstreichen, mit Ausnahme der in Richtung der Rotationsachse gesehen jeweils endständigen Ringscheiben (8, 8') und daß die Ringscheiben (4, 4') auf ihrem Umfang die Gehäuseinnenwand (11) überstreichen.

2. Vorrichtung nach Anspruch 1, **dadurch gekennzeichnet, daß** die Speichen (3, 3') jeweils an einer Stelle mit der gewellten Ringscheibe (4, 4') verbunden sind, wo die Ringscheiben (4, 4') am stärksten axial ausgebuchtet sind.

3. Vorrichung nach Anspruch 1 oder 2, **dadurch gekennzeichnet, daß** die Wellen 2, 2') mit einem Antriebsmittel für die betragsmäßig gleichschnelle Rotation benachbarter Wellen (2, 2') versehen sind.

4. Vorrichtung nach den Ansprüchen 1 bis 3, **dadurch gekennzeichnet, daß** alle Speichen 3 bzw. 3') auf einer Welle (2 bzw. 2') in gleicher axialer Richtung gegen das Lot zur Rotationsachse der Welle (2 bzw. 2') geneigt sind.

5. Vorrichtung nach den Ansprüchen 1 bis 4, **dadurch gekennzeichnet, daß** die Ringscheiben (4, 4') auf einem Teil ihres Umfanges einen zusätzlichen Kamm (51, 52, 53) tragen, der die Gehäuseinnenwand (11) bei Rotation der Wellen (2, 2') überstreicht.

6. Vorrichtung nach den Ansprüchen 1 bis 5, **dadurch gekennzeichnet, daß** der Kamm (51, 52, 53) so angeordnet ist, daß dieser bei Rotation der Wellen (2, 2') eine Förderwirkung entlang der Rotationsachse der Wellen (2, 2') aufweist.

7. Vorrichtung nach Anspruch 6, **dadurch gekennzeichnet, daß** die Kämme (51, 52, 53) zur Förderung des Mischgutes auf dem Teil der Ringscheiben (4, 4') angeordnet sind, der eine schraubenförmige Steigung mit gleichen Vorzeichen (Linksgewinde oder Rechtsgewinde) aufweist.

8. Vorrichtung nach den Ansprüchen 1 bis 7, **dadurch gekennzeichnet, daß** die axiale Ausdehnung der gewellten Ringscheiben (4, 4') mindestens 4 mal so groß ist, wie die maximale axiale Breite der Ringscheiben (4, 4') in einem Meridianschnitt.

**Claims**

1. Mixing device for the treatment of viscous material to be mixed, comprising a container (1) with a product inlet (5) and a product outlet (6), where appropriate a vapour connection (7), two or more shafts (2, 2'), to which annular discs (4, 4') are fitted by means of spokes (3, 3'), having a drive means for the rotation in the same direction of adjacent shafts (2 and 2' respectively), **characterized in that** the annular discs (4, 4') are formed to be corrugated in the direction of the axis of rotation of the shafts (2, 2'), **in that** annular discs (4) and spokes (3) together with the shaft (2) carrying them are designed in such a way that they fully sweep over the surfaces of the spokes (3'), annular discs (4') and the respectively adjacent shaft (2') carrying them in the course of the rotation of the shafts (2, 2') which is caused by the drive means, with the exception of the respective end-located annular discs (8, 8'), seen in the direction of the axis of rotation, and **in that** the annular discs (4, 4') sweep on their periphery over the housing inner wall (9).

2. Device according to Claim 1, **characterized in that** the spokes (3, 3') are connected to the corrugated annular disc (4, 4') in each instance at a position where the annular discs (4, 4') are most strongly axially bulged out.

3. Device according to Claim 1 or 2, **characterized in that** the shafts (2, 2') are provided with a drive means for the rotation of adjacent shafts (2, 2') which is equally rapid in terms of magnitude.

4. Device according to Claims 1 to 3, **characterized in that** all spokes (3 and 3' respectively) on a shaft (2 and 2' respectively) are inclined in the same axial direction relative to the vertical to the axis of rotation of the shaft (2 and 2' respectively).

5. Device according to Claims 1 to 4, **characterized in that** the annular discs (4, 4') carry, on a part of their periphery, an additional comb (51, 52, 53) which sweeps over the housing inner wall (11) in the course of rotation of the shafts (2, 2').

6. Device according to Claims 1 to 5, **characterized in that** the comb (51, 52, 53) is disposed in such a way that, in the course of rotation of the shafts (2, 2'), it has a conveying action along the axis of rotation of the shafts (2, 2').

7. Device according to Claim 6, **characterized in that** the combs (51, 52, 53) for conveying the material to be mixed are disposed on that part of the annular discs (4, 4') which has a helical pitch with the same sign (left-hand thread or right-hand thread).

8. Device according to Claims 1 to 7, **characterized in that** the axial extent of the corrugated annular discs (4, 4') is at least four times as great as the maximum axial width of the annular discs (4, 4') in a meridian section.

**Revendications**

1. Dispositif mélangeur pour traiter des substances visqueuses, constitué par un récipient (1) comportant une admission de produit (5) et une sortie de produit (6) et le cas échéant un manchon à vapeur (7), deux ou plusieurs arbres (2, 2') sur lesquels sont agencés des disques annulaires (4, 4') au moyen de branches (3, 3'), comportant un moyen d'entraînement pour la rotation en même sens des arbres voisins (2 ou 2'), **caractérisé en ce que** les disques annulaires (4, 4') sont réalisés ondulés en direction de l'axe de rotation, **en ce que** les disques annulaires (4) et les branches (3) sont réalisés conjointement avec l'arbre (2) qui les porte de telle sorte qu'ils balaient complètement les surfaces des branches (3'), des disques annulaires (4') et de l'arbre respectif voisin (2') qui les porte, lors d'une rotation des arbres (2, 2') provoquée par le moyen d'entraînement, exception faite des disques annulaires respectifs (8, 8') situés à l'extrémité, vus en direction de l'axe de rotation, et **en ce que** les disques annulaires (4, 4') balaient à leur périphérie la paroi intérieure (11) du boîtier.

2. Dispositif selon la revendication 1, **caractérisé en ce que** les branches (3, 3') sont reliées chacune au disque annulaire ondulé (4, 4') à un emplacement où les disques annulaires (4, 4') sont le plus fortement bombés en direction axiale.

3. Dispositif selon l'une ou l'autre des revendications 1 et 2, **caractérisé en ce que** les arbres (2, 2') sont pourvus d'un moyen d'entraînement pour la rotation à la même vitesse d'arbres voisins (2, 2').

4. Dispositif selon l'une quelconque des revendications 1 à 3, **caractérisé en ce que** toutes les branches (3 ou 3') sur un arbre (2 ou 2') sont inclinées dans la même direction axiale par rapport à l'axe de rotation de l'arbre (2, 2').

5. Dispositif selon l'une quelconque des revendications 1 à 4, **caractérisé en ce que** les disques annulaires (4, 4') portent sur une partie de leur périphérie une crête supplémentaire (51, 52, 53) qui balaie la paroi intérieure (11) du boîtier lors d'une rotation des arbres (2, 2').

6. Dispositif selon l'une quelconque des revendications 1 à 5, **caractérisé en ce que** la crête (51, 52, 53) est agencée de manière à présenter un effet de convoyage le long de l'axe de rotation des arbres (2, 2') lors d'une rotation des arbres (2, 2').

7. Dispositif selon la revendication 6, **caractérisé en ce que** pour convoyer la matière à mélanger, les crêtes (51, 52, 53) sont agencées sur la partie des disques annulaires (4, 4') qui présente un pas hélicoïdal de même signe (pas à gauche ou pas à droite).

8. Dispositif selon l'une quelconque des revendications 1 à 7, **caractérisé en ce que** l'extension axiale des disques annulaires ondulés (4, 4') est au moins 4 fois plus grande que la largeur axiale maximale des disques annulaires (4, 4') dans une coupe méridienne.

**Fig.1a**

8'  11  2'  2  8

**Fig.1b**

5  A  7  8'  1  4  2  3  8'  6  A

**Fig.1c**

4'  3'

EP 0 917 941 B1

Fig. 2

12

Fig.3

Fig. 4

Fig. 5a

Fig.5b

Fig.6

Fig. 7

# Fig. 8

0                                                    360°

53  51  52

EP 0 917 941 B1